# EUROPEAN PATENT APPLICATION

(11) **EP 1 760 805 A2**
(43) Date of publication of application: **07.03.2007**
(21) Application number: 06120152.1
(22) Date of filing: 05.09.2006
(51) Int. Cl.: H01M 2/02

(54) **Battery housing and method of manufacturing the same**

(30) Priority: 06.09.2005 US 221039
(71) Applicant: X-CYTE, Incorporated, San Jose, CA 95119 (US)
(72) Inventor: Reis Antonio L., Modesto CA 95358 (US)
(74) Representative: Poulin, Gérard

(57) **Abstract**

Disclosed is a housing for lithium based batteries, suitable for large format batteries, and a method of manufacturing such a housing using direct electroplating resin technology. The housing, while maintaining stack pressure and acting as a moisture and electrolyte barrier, is lighter in weight, smaller in volume, and is safer than conventional metal housings. The manufacturing process is well suited for automation and is less expensive than current manufacturing processes.

## Description

### FIELD OF THE INVENTION

The present invention relates generally to the field of batteries. More particularly, the present invention relates to the manufacture of housings for lithium based batteries, suitable for large format cylindrical and prismatic batteries, using direct electroplating resin technology.

### BACKGROUND OF THE INVENTION

The United States' petroleum production peaked in 1970. Geologists have predicted that the peak of global oil production is imminent. While supply is diminishing, demand continues to increase. The industrialized countries are the largest consumers of oil but until 1998 had not been the most important growth markets for some years. The countries of the Organization for Economic Cooperation and Development (OECD), for instance, account for almost two-thirds of worldwide daily oil consumption. In contrast, however, oil demand in the OECD grew by some 11 percent over the 1991-97 period, while demand outside the OECD (excluding the Former Soviet Union) grew by 35 percent. After the Arab Oil Embargo, the implementation of gasoline consumption standards for new passenger cars (the "Corporate Average Fuel Economy" or CAFE standards) was important in moderating gasoline demand growth, even while both the number of cars on the road and the miles they traveled increased. Beginning in the early 1990's, however, the popularity of pick-up trucks and sports utility vehicles, which are not as fuel efficient as standard automobiles, has sparked new gasoline demand growth in the United States. Whereas the fleet averages for light trucks and sports utility vehicles are about 20.7 miles per gallon, automobiles average a minimum of 27.5 miles per gallon.

In the United States, approximately two-thirds of all oil use is for transportation. In transportation uses, there is little fuel substitution possible in the short term and only limited potential in the longer term, given current technology. Oil continues to account for more than 95 percent of all the energy used for transportation in the United States.

Electric cars have been proposed as a solution to the oil shortage, as well as to the environmental consequences of using oil as a source of energy. Currently, lead-acid batteries are being used. However, there are significant issues with these batteries that have made them commercially impracticable. First, they have a low energy density-- gasoline contains 100 times more energy per pound. Consequently, a typical lead-acid battery pack for a car weighs 1,000 pounds or more. Second, they are bulky. Third, they have a limited capacity. Typically, a lead-acid battery pack holds 12 to 15 kilowatt-hours of electricity, giving a car a range of approximately 50 miles. This range is even shorter in colder weather. Fourth, they are slow to charge. Typical recharge times for a lead-acid pack is between four to ten hours for full charge, depending on the battery technology and the charger. Fifth, they have a short life. They must be replaced every three to four years, perhaps 200 full charge/discharge cycles. Exasperating this problem, disposed batteries can be an environmental hazard if not properly recycled. And sixth, they are expensive. They are currently approximately $2,000.

The application of lithium rechargeable battery technology to electric cars appears to hold much greater promise. Lithium has a high capacity (3800 Ah/kg) and low electronegativity (0.97), resulting in a battery with a high energy density and high voltage. A lithium-ion battery has four times the energy density of lead-acid batteries and two to three times the energy density of nickelcadmium and nickel-metal hybrid batteries. A lithium-polymer battery's energy density is greater still. The voltage range for a lithium polymer battery is typically 2.5 to 3.5 volts and a lithium ion battery has a voltage range of 3.6-3.7 volts. Lithium-based batteries have a flat discharge characteristics, and one of the best storage lives. Theoretically, a lithium polymer electrolyte battery can be recharged more than 1000 times. This translates into a battery that is lighter weight, lower cost per unit of energy, and has a higher more stable voltage. The materials that are used to produce lithium-based batteries are less toxic than the components of nickel cadmium or lead acid cells and their disposal poses fewer environmental issues. A driving range of 300 miles (comparable to the driving range of a conventional car on a tank of gasoline) is theoretically obtainable with a lithium polymer battery.

A lithium secondary (rechargeable) battery contains a positive electrode (anode), a negative electrode (cathode), and an ion conducting layer sandwiched between these electrodes as a main component. If external pressure is not exerted on these layers, the distance between the electrode surfaces becomes far from each other, failing to maintain the electric connection between the electrodes via the ion conducting layer, thereby deteriorating the battery properties. The homogeneity of electrical resistance (and thereby current flow) across the surface of such an electrode is disturbed, leading to lithium plating, dendrite formation, and short-circuiting. Lithium plating is dendritic and may cause the battery to short circuit. A short-circuited battery heats up during charging and goes into reversal during full battery discharge. In reversal, lithium is likely to plate on the cathode which can cause direct chemical reaction between cathode material and lithium, generating heat. Enough heat may be generated to melt lithium (165 °c), which may result in an explosion.

In order to enforce stack pressure and prevent leakage of the electrolyte, a tightly rolled ("jelly roll") cell is typically placed into a rigid metal housing (often cylindrical in shape) with internal dimensions that are only slightly larger than the full size of the jelly roll. As the jelly roll is coiled tighter to fit into the metal housing, thickness of the diameter of the jelly roll can vary. A variation of 10 microns on the lamination (anode, catode and separator) can represent a change in jelly roll diameter of 500 microns or more for large batteries.

This variation in diameter of the jelly roll creates voids or lack of contact between the layers of the jelly roll (leading to the problems caused by inadequate stack pressure discussed above).

Current metal housings (or containers) are manufactured using a deep drawn process. This process is well developed with good quality and output rates, but is expensive. The process places limitations on how thin the metal housing can be, as the metal used must be sufficiently thick so as not to tear while it is being stretched.

The metal container is electrically connected to the anode. The cathode is connected to a terminal and the cell is hermetically sealed. In the cylindrical-type storage battery used today, a metal housing is sealed by either crimping the metal housing to a cap (or lid) or using a laser welder.

The welding procedure used is highly complex, but well developed. There is a high cost associated with both the welding equipment and the maintenance required. This process also places a limitation on how thin the metal housing can be, since the metal must be sufficiently thick in order to bend.

As a consequence of these manufacturing limitations, the conventional metal housing comprises a large percentage of the volume and weight of a lithium-based battery, thus decreasing the energy density of the battery unit volume and unit weight. This is an even more significant problem in the case of large format lithium batteries, where in order to draw a taller can the starting metal plate must be thicker and heavier.

Additionally, because of the fixed dimensions of the metal housing there is a large amount of void space in the container. This void space implies lack of pressure on the laminated interface surfaces, and consequent underperformance and risk of explosion.

Another serious disadvantage of using a metal housing is a result of metal's burst pressure. Because of lithium's higher capacity, there is a heightened danger of explosions associated with the use of a lithium battery. When an excessive electrical or thermal load is applied, a short-circuit state occurs within the battery thus generating gas, and abnormally high internal pressure. When the battery is overcharged, gas is generated within the battery due to decomposition of an electrolytic solution, and the internal pressure of the battery rises abnormally. Due to the thickness of the metal can, pressure may accumulate until finally a catastrophic explosion results, wherein contents of the battery may be uncontrollably propelled.

One approach to avoiding a potentially excessive build-up of pressure in the cell container, normally used with nickel-based batteries, has been to employ a resealable valve. However, the periodic and continuous release of gas pressure may, in some situations, permit electrolyte leakage containing salt and other particulate which may foul the resealable valve, and generally requires additional costly components.

Another approach, mainly used in cylindrical Liion batteries, is to use a membrane seal that ruptures or is punctured when exposed to excessive pressure, typically at around 3448 kPa (500 psi). There is usually some serious swelling of the cell before the seal breaks. Puncture mechanisms such as a spiked member may be employed to punch a hole in the thin membrane once the pressure reaches a predetermined amount. Alternatively, a rupture mechanism may be employed in the form of a thin membrane which ruptures when the internal pressure of the cell becomes too great.

While these approaches for venting high pressure gas from the cell have resulted in the ability to vent excessive pressure, they have not optimized the volume consumed by the seal member, or lack an accurate rupture pressure mechanism.

Plastic housings for batteries offer several advantages over solid metal housings. Thermoplasic materials are relatively inexpensive. Secondly, plastic can be easily formed into complex shapes for battery housings by extrusion, injection molding, thermoforming or other processes. Also, plastic containers will rupture at relatively low internal pressures -- a desirable battery safety feature.

However, plastic is permeable to water vapor and organic solvent vapors. The migration of water vapor into a lithium battery and electrolyte solvent out of the battery will, generally, adversely affect a battery's electrical performance. Even if a very small amount of moisture exists in a battery system, lithium salt is decomposed and a free acid component such as hydrogen fluoride (HF) or ion fluoride is generated. When the free acid component reacts with the lithium to form lithium fluoride (LiF) or the like and the lithium in the battery system is consumed, problems occur such that shelf stability or charge/discharge cycle characteristic deteriorates and a theoretical battery capacity cannot be obtained.

When the surface-treated moldings are bonded together with an epoxy or acrylic adhesive, the bonded portions may be affected and reduced in bonding strength by the electrolysis solution comprising organic solvents, in the case of lithium and other similar types of batteries. Also, since those adhesives are hard, the bonded portions, when subject to an external force such as vibrations, may crack and leak the electrolytes. Since lithium batteries must be strictly protected against moisture, degradation of the bonded portions has catastrophic consequences.

Currently, most prismatic configurations use foil/plastic laminated sheets that are heat-sealed to form a pouch. The metal terminal contacts are made through a seal surface. To achieve manufacturing efficiency, the blister packaging process is employed. This process suffers from numerous disadvantages.

First, the blister package requires sealing a surface on all sides of the package. Since the performance of the battery depends much on the integrity of the seal, the sealing process is critical to the packaging operation.

Second, there are numerous variables associated with the sealing process that cannot be monitored in real time, making the process difficult at high speeds.

Third, folding and gluing of the sealing tabs is complex and can affect the electrode components and damage the seal.

Fourth, the package must be sealed under vacuum in an attempt to maintain constant pressure on the entire electrode interface area. Since the package has significant void area, the negative pressure inside the package will move some of the electrolyte solution to those void areas providing for discrete electrical paths affecting the performance of the cell. Because heat is applied to the package to seal it while applying the vacuum, there is a significant risk of displacement of electrolyte in the cell.

Fifth, the contact tabs must pass through the seal, creating a metal to plastic interface that is difficult to seal and monitor.

Sixth, the differential of pressure due to altitude influences the pressure exerted on the electrode interface area, and may affect the performance of the battery.

Luch, incorporated herein in its entirety, discloses polymer-based compositions that can be electroplated directly without any pretreatments, i.e., directly electroplateable resins (DER). U.S. Patent No. 3,865,699. According to the method for creating DER taught by Luch, sulfur (including any sulfur provided by sulfur donors) in amounts greater than about 0.1% by weight of the overall polymer-carbon-sulfur composition are incorporated into polymer-based compounds filled with conductive carbon black. The carbon black is present in amounts sufficient for the overall composition to have an electrical volume resistivity of less than 1000 ohm-cm. The minimum workable level of carbon black required to achieve electrical resistivities less than 1000 ohm-cm appears to be about 8 weight percent based on the weight of polymer plus carbon black.

The sulfur of the DER is disclosed as participating in formation of a chemical bond between the polymer-based substrate and an initial Group VIII based metal electrodeposit. In addition, the sulfur greatly increases lateral growth of the Group VIII based metal electrodeposit over the surface of the substrate, thereby avoiding a fatal problem with prior art attempts to achieve direct electrodeposition on electrically conductive filled resins. Direct, uniform, rapid and adherent coverage of the DER with an electrodeposited Group VIII metal or Group VIII metal-based alloy is achieved.

### SUMMARY OF THE INVENTION

A housing for a lithium based battery is described along with various methods for manufacturing the same. The battery housing is plated using DER as a substrate. The battery housing may meet the requirements for moisture and electrolyte barrier applications due to its excellent coverage characteristics. The plating process environment may not be aggressive, therefore it can be used to plate the exterior of batteries in a sequence of operations that may produce a seamless light weight package, maintaining the flexibility necessary to expand under extreme pressure, and thereby reducing the risk of explosion.

### BRIEF DESCRIPTION OF THE DRAWINGS

The accompanying drawings, which are incorporated into and constitute a part of this specification, illustrate one or more embodiments of the present invention and, together with the detailed description serve to explain the principles and implementations of the invention.
FIG. 1 is a perspective view of a housing.
FIGs. 2a-b are perspective views of a case.
FIGs. 2c-d are perspective views of a cap.
FIGs. 3a-c are sectional views of a housing.
FIG. 4 is a perspective view of a housing.
FIG. 5a is a perspective view of a cap.
FIG. 5b is a perspective view of a housing.
FIG. 6 is a top view of a housing.
FIG. 7a is a perspective view of a housing.
FIG. 7b is a exploded view of a cap.
FIG. 8 is a schematic of a method for plating and laminating a cap.
FIG. 9 is a schematic of a method for manufacturing a battery.

### DETAILED DESCRIPTION

Those of ordinary skill in the art will realize that the following detailed description of the present invention is illustrative only and is not intended to be in any way limiting. Other embodiments of the present invention will readily suggest themselves to such skilled persons having the benefit of this disclosure.

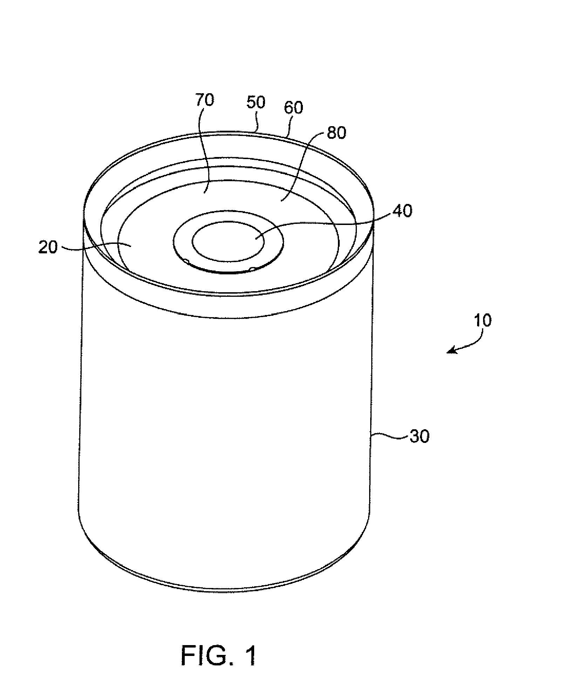

FIG. 1 is a perspective view of a plastic cylindrical housing 10 comprising a cap 20, a case 30, and a positive contact pad 40. In an embodiment, housing 10 may be manufactured using known molding techniques such as, e.g., injection molding, extrusion molding, blow molding, vacuum forming, and press molding. These methods may be inexpensive, have high productivity rates, and require low capital investment.

Housing 10 may comprise a thermoplastic that is chemically inert to most battery chemistries. In an embodiment, housing 10 comprises Polyvinylidine Difluoride, or PVDF. In an embodiment, housing 10 comprises polyethylene.

Housing 10 may be of any thickness suitable to prevent electrolyte from leaking out of the cell while keeping moisture from entering the cell. In an embodiment, housing 10 is configured to have a thickness such that the housing balloons at pressures lower than that required to burst a metal housing, diminishing the risk of explosions. In an embodiment, housing 10 is configured to withstand internal pressures over 250 psi, but to balloon at a pressure below 500 psi.

In an embodiment, housing 10 may comprise a thermoplastic layer. A DER may be coated onto the thermoplastic layer. A DER may be coated from the thermoplastic layer extending to a current collector. The DER may then be plated in order to form a seamless, thin housing capable of preventing moisture migration and suitable for large format lithium based batteries.

In an embodiment, housing 10 may comprise an inner layer 50 and an outer layer 60. The inner layer 50 may comprise, for example PVDF. Housing 10 may further comprise a DER 70 and a plated area 80. Plated area 80 may comprise, for example, nickel. Plated area 80 may be of any thickness suitable for forming a moisture barrier. In an embodiment, plated area 80 is less than about 7 mil thick. In an embodiment, plated area 80 is from about 2 mil to about 7 mil thick. Plated area 80 may function as a negative contact and may help dissipate heat.

In an embodiment, DER 70 may be coated on inner layer 50 after the electrode assembly is inserted into case 30 and cap 20 is sealed to case 30. DER 70 may then be electrolytically plated, forming plated area 80.

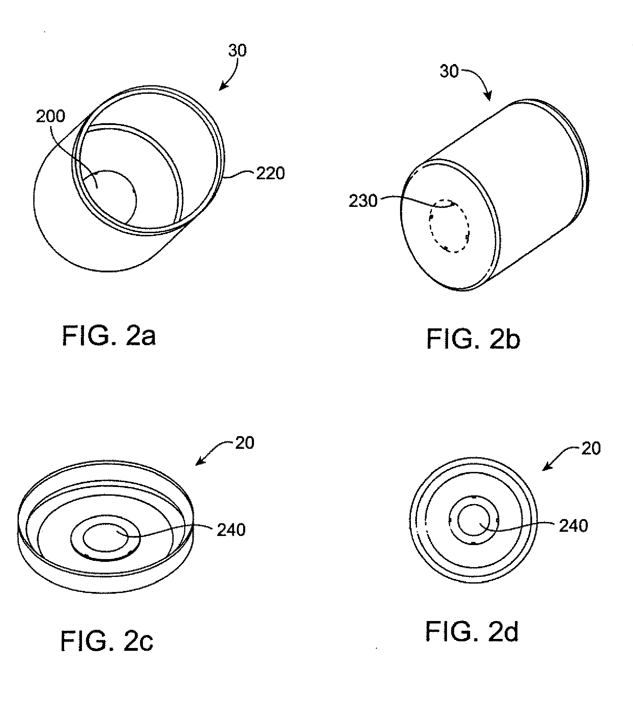

FIGs. 2a-d illustrate plastic cases 30 and caps 20. As depicted in FIG. 2a, negative electrode contact plate 200 may be inserted into case 30 and secured by protruding tabs to the formed or preformed plastic sheet 220. FIG. 2b illustrates bent tabs 230 of the negative contact plate 200 inside plastic case 30. FIG. 2c is a perspective view of a positive contact plate 240 secured to cap 20. FIG. 2d is a top view of positive contact plate 240 secured to cap 20.

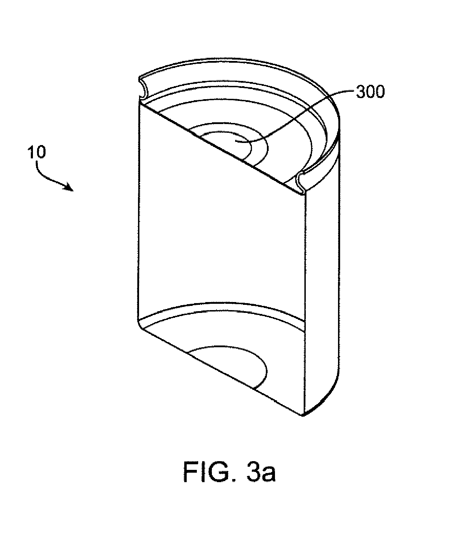

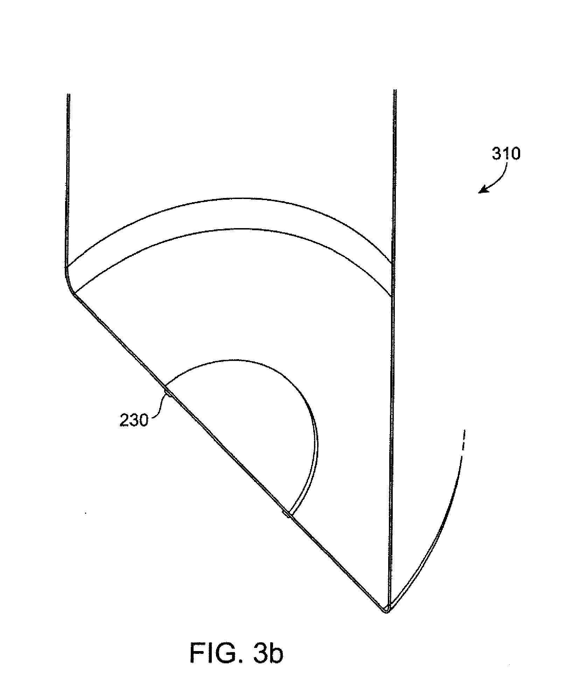

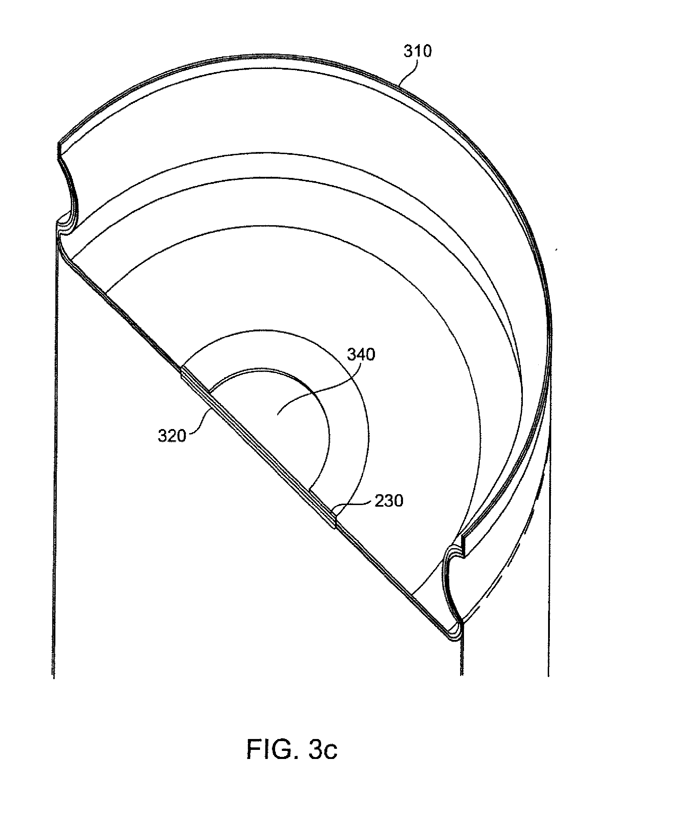

FIGs. 3a-c are sectional views of housing 10. FIG. 3a illustrates the use of a masked area 300 where plating of the DER will not occur. Due to the sheets configuration, minimum masking is required in conjunction with DER. Masking may be utilized to further strengthen the junctions between bonded portions. FIG. 3b shows folded tabs 230 protruding through the plastic sheet 310. FIG. 3c shows an inner positive contact plate 320 with tabs 230 protruding outward and an outer positive contact plate 340 that may be crimped to the tabs 230 of the inner contact plate 320.

Electrical contacts may be integrated by lamination of multiple vacuum formed pieces along with the metal components or molded around the metal components. This approach provides a solution with little risk for internal shorts to the housing, yet because the housing has no metallic layer at the time of assembly, the housing can be shrunk to the size of a jelly roll. In this manner, both the connection between the layers of the jelly roll and the power density of the battery are enhanced.

Also, the material used may not shrink at temperatures maintained during normal functioning of the battery, such as in the engine compartment of an automobile. However, in the case of high heat generated perhaps due to a short, the material may shrink and rupture the case preventing pressure buildup and the possibility of an explosion. In addition, in the event that there is a gas build-up due to a short, the plastic casing may instead expand until a threshold pressure is reached (which may be lower than the pressure at which a metal housing would burst), at which time the plastic case may rupture (possibly far less explosively than in the case of a metal housing).

In an embodiment, an electrochemical cell is inserted into case 30 after metallic terminal features are attached to housing 10. In an embodiment, an X-Y type robotic mechanism may be used to insert an electrochemical cell into case 30. Cap 20 is then applied to case 30 and heat is applied in order to seal cap 20 to case 30. By carefully controlling the temperature used during the manufacturing process, cap 20 and case 30 may be laminated in order to achieve excellent adhesion between the two. Uniform peripheral pressure may then be applied to housing 10. In an embodiment, uniform peripheral pressure is applied by shrinking housing 10 once sealed. In an embodiment, uniform peripheral pressure is applied by expansion of case 30 during insertion of the electrochemical cell followed by contraction of case 30 and cap 20, such that housing 10 conforms to the electrochemical cell after insertion.

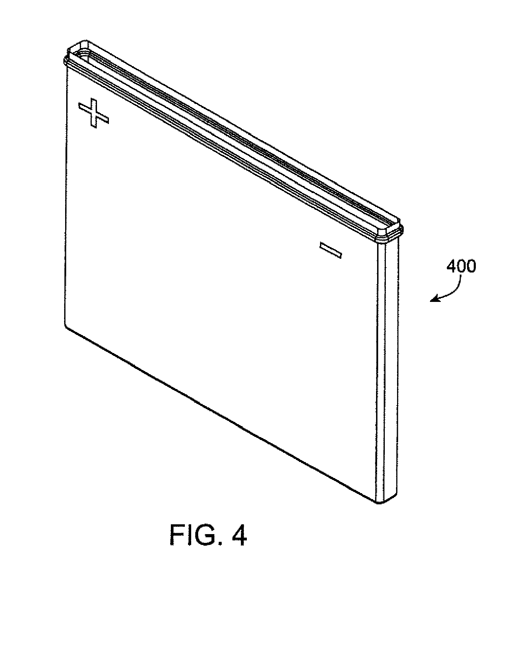

FIG. 4 is a perspective view of a plastic prismatic housing 400. The prismatic format may offer advantages over a cylindrical battery packaging, for example improved volumetric power density. Twelve to sixteen current collector pairs can be stored in plastic housing 400.

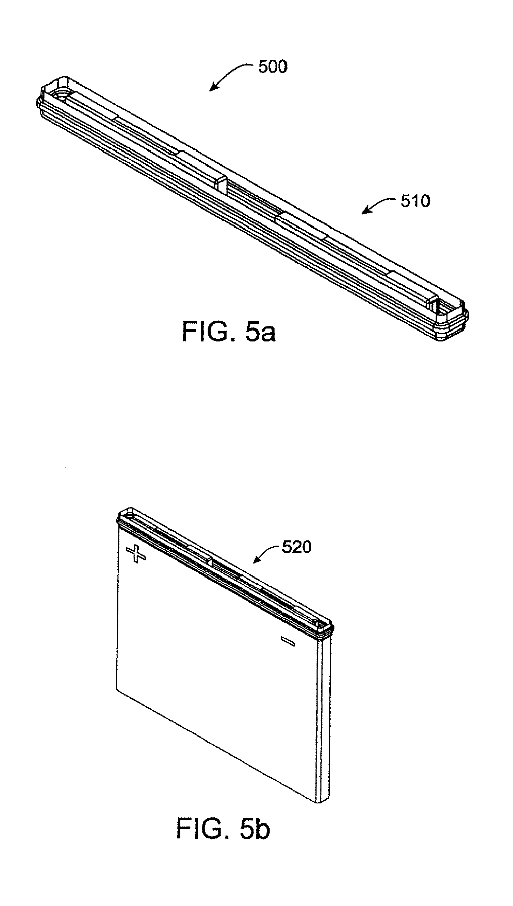

FIG. 5a is a perspective view of a cap 500 suitable for use with a prismatic plastic housing. Cap 500 may comprise leads 510, which can be laminated. This embodiment advantageously provides a large surface contact for terminal connections.

FIG. 5b is a perspective view of prismatic plastic housing 520. In the prismatic configurations, after plating the DER, since the housing is flexible, the entire battery can be placed into a gel-like, soft material such as urethane so that pressure may be applied over the entire package. This approach is also valid for cylindrical cells but due to the large void volume, the weight of the battery will increase substantially.

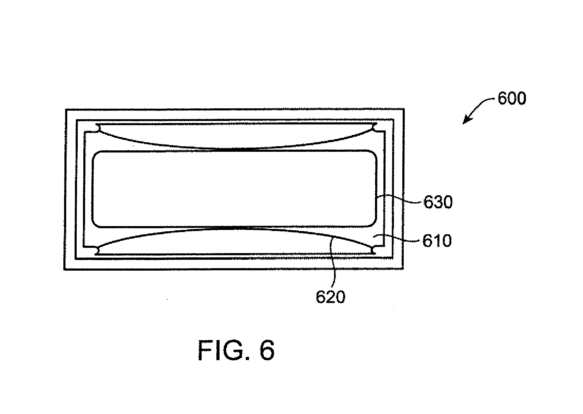

FIG. 6 is a top view of a prismatic housing 600 comprising a pressure cage 610. Pressure cage 610 may comprise pressure ribs 620 configured to maintain even pressure across the surface of the electrode stack 630 on charging and discharging of the battery. The pressure cage may comprise a leaf spring and a flat pressing plate, etc. The battery can be horizontally disposed within the plastic housing with a weight placed thereon as a pressing member to apply pressure in the thickness direction of the stack.

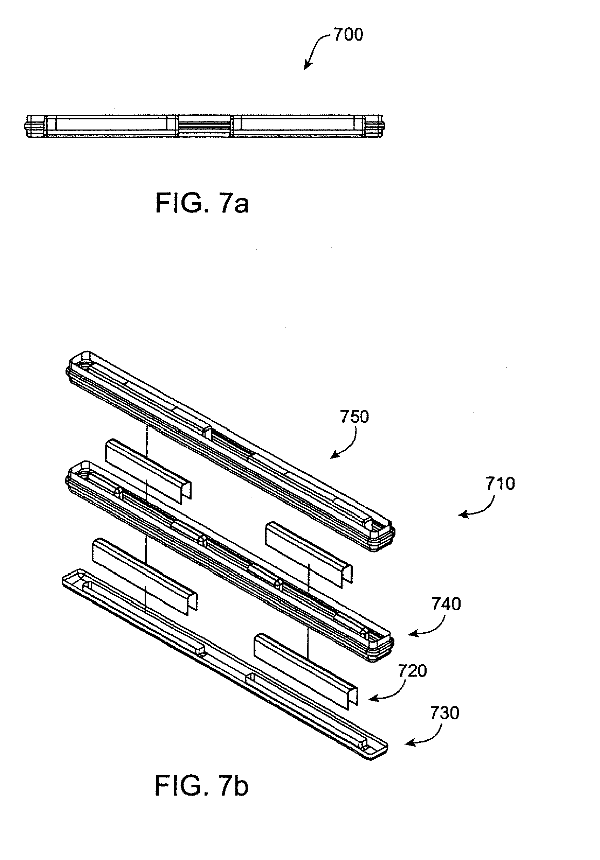

FIG. 7a is a top plan view of a prismatic housing 700. FIG. 7b is a exploded view of a cap 710 for prismatic housing 700. In this embodiment, cap 710 comprises an external terminal contact 720, an internal terminal contact 730, a bottom cap 740, a main cap 750, and a top cap 760. The metal contact is laminated and secured in order to form a battery terminal. However, according to the method described herein, the external surface of the housing is electroplated without making contact with the terminals. The three layers of this embodiment may provide an easy and simple method of achieving the metal feed-through.

In another embodiment, a sheet of thermoplastic may be formed into the shape of a multitude of caps or cases using a vacuum molding or a pressure molding technique. In the case of a cap having multiple layers, such as the cap for the prismatic housing discussed above, the various layers of the cap, e.g., top, main, and bottom caps, may be similarly formed from a single sheet of thermoplastic in order to form layers having the same features and being equally spaced apart. In this manner, a sheet of thermoplastic that may be, e.g., 48 inches by 48 inches, can be processed at one time, instead of a single piece, thus more efficiently forming multiple caps, cases, and/or cap layers.

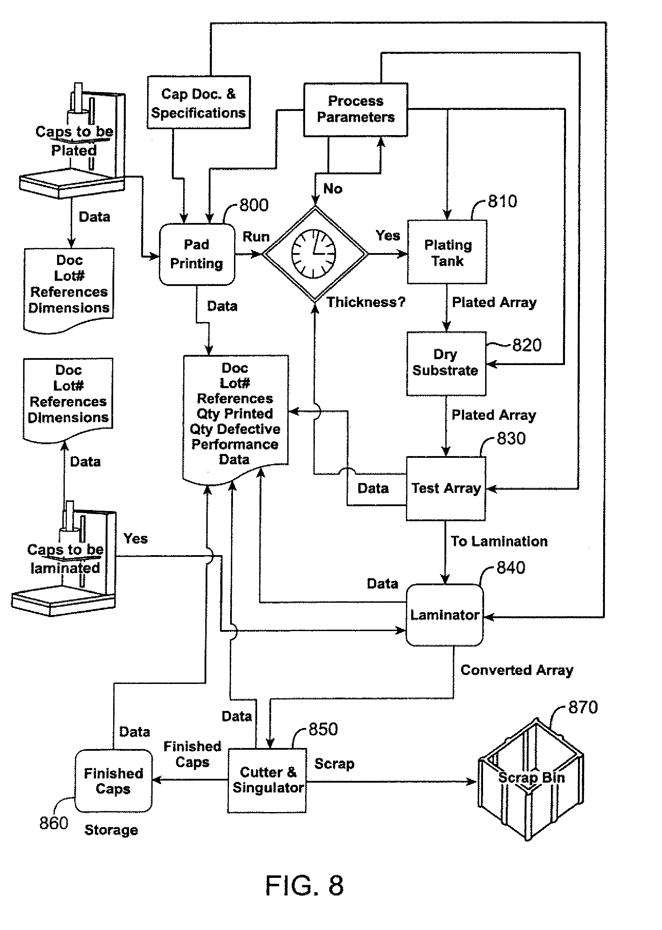

FIG. 8 is a schematic of a method of plating and laminating a cap. The method can be completely automated, enabling a fast and efficient manufacturing process. Because one may not be relying on processes with a large array of variables such as welding, the process rate may increase and the process complexity and reliability may substantially decrease.

In one embodiment, a positioning system may be used to move a sheet through various assembly stages. The positioning system may be manual or may be fully or in part automated using a conveyor belt, tray, and/or robotic arm. In another embodiment, a computer program may be in communication with the positioning system and all stations along the process. According to this embodiment, the computer program may record and store data used by the program to determine whether the product of some or all stations meets predetermined criteria and quality requirements.

According to the embodiment depicted in FIG. 8, a molded sheet comprising a multitude of caps may be first moved from a pad printing station 800 to a plating tank 810. The amount of time that the sheet stays in the plating tank may be determined by the desired thickness of the plating. The sheet may then be moved from the plating tank 810 to a substrate dryer 820, to a test station 830, then to a laminator station 840, a singulator station 850, and finally to a storage unit 860. At singulator station 850, the sheet may be separated into individual caps or cap layers by punching, laser cutting or other separating mechanism known in the art. Scraps may be carried to a scrap bin 870.

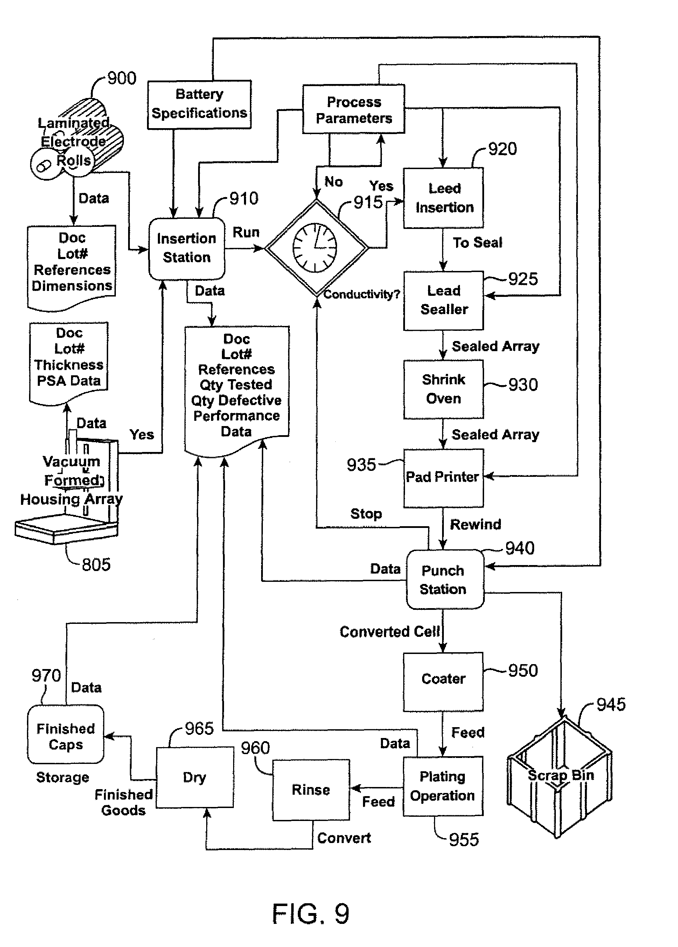

FIG. 9 is a schematic of a method for plating a plastic housing. The method may be similarly automated, as described above. In an embodiment, a sheet comprises a multitude of molded cases. Metal tabs may be inserted into the cases, crimped and sealed. Laminated jelly rolls or electrode stacks may then be inserted into the cases. Caps may be placed onto the cases and sealed to the cases by applying heat.

The housings may then be heat shrunk to provide the desired pressure on the electrode assembly. The housings may be taken to a separation station and separated using punching, laser cutting, or other separating mechanism known in the art. The housing may be masked, so that the battery is not shorted, and a DER may be coated onto the housing.

In one embodiment, a user may manually mask the top and bottom of the housing using a clamp. The housing may then be sprayed with DER or, alternatively, dipped into a tank and dried. In another embodiment, a conveyor belt may be used to hold, and thereby mask, the housing on top and bottom and the housing may then pass by a sprayor. In an embodiment, the conveyor belt may spin the housing in front of the sprayor. The housing may then be electrolitically plated providing a seamless enclosure for the battery.

The rate of the plating process may be adequate for large volume production of battery cells. The capital investment for the plating process may be very small. A significant advantage of the use of DER in the packaging of lithium polymer batteries is the ability of plating specific areas to design a light-weight battery housing with robust features that eliminate shorts during the packaging operations, as well as during use.

Battery cells of the present invention may be made in a variety of sizes and configurations as known to those skilled in the art. These battery design configurations include, but are not limited to, planar, prismatic, jelly roll, w-fold, stacked, and the like. The invention may be used in conjunction with any type of lithium based battery, including but not limited to lithium liquid electrolyte batteries, lithium polymer electrolyte batteries, and lithium ion gel electrolyte batteries.

Further modifications and alternative embodiments of various aspects of the invention will be apparent to those skilled in the art in view of this description. Accordingly, this description is to be construed as illustrative only and is for the purpose of teaching those skilled in the art the general manner of carrying out the invention. It is to be understood that the forms of the invention shown and described herein are to be taken as the presently preferred embodiments. Elements and materials may be substituted for those illustrated and described herein, parts and processes may be reversed, and certain features of the invention may be utilized independently, all as would be apparent to one skilled in the art after having the benefit of this description of the invention. Changes may be made in the elements described herein without departing from the spirit and scope of the invention as described in the following claims.

## Claims

1. A battery housing comprising a directly electroplateable resin (DER).

2. The battery housing of claim 1, wherein the housing is configured to shrink such that a constant pressure is exerted on the battery.

3. The battery housing of claim 1, wherein the battery housing is prismatically configured.

4. The battery housing of claim 1, further comprising a gel-like outer shell, wherein the shell is configured to apply a constant pressure to the battery housing.

5. The battery housing of claim 4, wherein the shell comprises urethane.

6. The battery housing of claim 1, further comprising a nickel layer, said nickel layer having a thickness that is sufficient to prevent moisture from entering the housing.

7. The battery housing of claim 1, wherein the housing is seamless.

8. The battery housing of claim 1, further comprising an inner polymeric layer.

9. The battery housing of claim 8, wherein the inner polymeric layer comprises a thermoplastic polymer.

10. The battery housing of claim 8, wherein the inner polymeric layer is chemically inert to an electrolyte in the battery.

11. The battery housing of claim 8, wherein the inner polymeric layer comprises PVDF.

12. The battery housing of claim 8, further comprising an outer polymeric layer.

13. The battery housing of claim 12, wherein the outer polymeric housing comprises LDPE.

14. The battery housing of claim 1 further comprising a pressure cage.

15. The battery housing of claim 3, further comprising a top cap, a main cap, and a bottom cap.

16. The battery housing of claim 1, wherein the housing is cylindrically configured.

17. A method of manufacturing a lithium based battery comprising coating a battery housing with a DER.

18. The process of claim 17, further comprising inserting an electrochemical cell into the housing using a X-Y type robotic mechanism.

19. The process of claim 17, further comprising inserting an electrochemical cell into the housing and shrinking the housing to conform to the electrochemical cell.

20. The process of claim 17, further comprising inserting an electrochemical cell into the housing by expanding the housing, wherein the housing contracts after the electrochemical cell is inserted to conform to the electrochemical cell.

21. The process of claim 17, further comprising testing the electrochemical cell's conductivity prior to plating the DER layer of the housing with metal.

22. A method of manufacturing a lithium battery comprising:
forming a cap and a case;
inserting onto the cap and case a metallic terminal;
inserting an electrochemical cell into the case;
applying the cap to the case;
laminating the case to the cap;
applying a uniform peripheral pressure to the electrochemical cell; and
coating the cap and case with DER.

23. The method of claim 22, wherein the cap and case are coated with DER by immersing said cap and case into a solution.

24. The method of claim 22, wherein the cap and case are coated with DER by spraying said cap and case with a solution.

25. The method of claim 22, further comprising shrinking the cap and case after laminating the case to the cap.

26. The method of claim 22, further comprising expanding of the cap and case.

27. A seamless battery housing suitable for use with a lithium polymer or lithium ion battery, wherein the housing comprises a thermoplastic layer.
